# EUROPEAN PATENT APPLICATION

(11) **EP 4 755 800 A1**
(43) Date of publication of application: **10.06.2026**
(21) Application number: 25221093.5
(22) Date of filing: 05.12.2025
(51) Int. Cl.: B64D 35/023, B64D 27/35, B64D 27/10, B64D 27/33

(54) **AIRCRAFT WITH ELECTRICALLY POWERED ENGINE ACCESSORIES**

(30) Priority: 05.12.2024 US 202418969847
(71) Applicant: RTX Corporation, Farmington, CT 06032 (US)
(72) Inventor: YAZICI, Murat, Glastonbury (US); MORTON, Jeffrey T., Manchester (US)
(74) Representative: Dehns

(57) **Abstract**

An assembly is provided for an aircraft (20). This assembly includes an open propulsor rotor (60), a turbine engine (58), an accessory gearbox (152), a first electric machine (142A), a second electric machine (142B), an aircraft system (24) and an electrical system (140). The turbine engine is configured to drive rotation of the open propulsor rotor about an axis (50). The accessory gearbox is mounted with the turbine engine. The first electric machine is operatively coupled to the turbine engine through the accessory gearbox. The second electric machine is operatively coupled to the turbine engine through the accessory gearbox. The aircraft system is configured as an actuation system, a fuel system, a lubrication system and/or a cooling system. The aircraft system includes a plurality of electric devices. The electrical system is electrically coupled to the first electric machine, the second electric machine and each of the electric devices.

## Description

### BACKGROUND OF THE DISCLOSURE

### 1. Technical Field

This disclosure relates generally to an aircraft and, more particularly, to an electric machine system for an aircraft propulsion system.

### 2. Background Information

An aircraft propulsion system may include one or more electric machines. Various electric machine systems are known in the art. Various aircraft propulsion systems including open rotor propulsion systems are also known in the art. While these known electric machine systems and aircraft propulsion systems have various benefits, there is still room in the art for improvement.

### SUMMARY OF THE DISCLOSURE

According to an aspect of the present disclosure, an assembly is provided for an aircraft. This assembly includes an open propulsor rotor, a turbine engine, an accessory gearbox, a first electric machine, a second electric machine, an aircraft system and an electrical system. The turbine engine is configured to drive rotation of the open propulsor rotor about an axis. The accessory gearbox is mounted with the turbine engine. The first electric machine is operatively coupled to the turbine engine through the accessory gearbox. The second electric machine is operatively coupled to the turbine engine through the accessory gearbox. The aircraft system is configured as an actuation system, a fuel system, a lubrication system and/or a cooling system. The aircraft system includes a plurality of electric devices. The electrical system is electrically coupled to the first electric machine, the second electric machine and each of the electric devices.

According to another aspect of the present disclosure, another assembly is provided for an aircraft. This assembly includes an aircraft airframe, an aircraft propulsion system, an aircraft system and an electrical system. The aircraft propulsion system is mounted to the aircraft airframe. The aircraft propulsion system includes an open propulsor rotor, a turbine engine and a first electric machine. The turbine engine is configured to drive rotation of the open propulsor rotor about an axis. The first electric machine is operatively coupled to the turbine engine. The aircraft system is configured as an actuation system, a fuel system, a lubrication system and/or a cooling system. The aircraft system includes a plurality of electric devices. A first of the electric devices is mounted with the aircraft propulsion system. A second of the electric devices is mounted with the aircraft airframe. The electrical system is electrically coupled to the first electric machine and each of the electric devices.

According to still another aspect of the present disclosure, another assembly is provided for an aircraft. This assembly includes an open propulsor rotor, a turbine engine, a gearbox, one or more electric machines, a first electric device and an electrical system. The turbine engine is configured to drive rotation of the open propulsor rotor about an axis. The gearbox is mounted with the turbine engine. The one or more electric machines are operatively coupled to the turbine engine through the gearbox. The gearbox is dedicated to transferring mechanical power between the turbine engine and the one or more electric machines. The electrical system is electrically coupled to the one or more electric machines and the first electric device. The electrical system is configured to receive a first current of electricity from at least one of the one or more electric machines. The electrical system is configured to provide a second current of electricity to the first electric device.

A larger quantity of the electric devices may be mounted with the aircraft airframe than with the aircraft propulsion system.

The assembly may also include a gearbox and a second electric machine. The first electric machine and the second electric machine may each be operatively coupled to the turbine engine through the gearbox.

The aircraft system may be configured as at least or only the actuation system.

The aircraft system may be configured as at least or only the lubrication system.

The aircraft system may be configured as at least or only the fuel system.

The aircraft system may be configured as at least or only the cooling system.

At least one of the electric devices may be mounted to the turbine engine.

The turbine engine may include a compressor section, a combustor section, a turbine section, a flowpath and an engine case. The compressor section, the combustor section and the turbine section may be housed within the engine case. The flowpath may extend through the compressor section, the combustor section and the turbine section from an inlet into the flowpath to an exhaust from the flowpath. At least one of the electric devices may be mounted to the engine case.

The assembly may also include a nacelle wall housing and forming an aerodynamic cover over an engine case that is part of the turbine engine. At least one of the electric devices may be arranged within a compartment formed by and extending radially between the engine case and the nacelle wall.

The assembly may also include a pylon structure. The turbine engine may be mounted to the pylon structure. At least one of the electric devices may be mounted with the pylon structure.

The assembly may also include an aircraft wing. At least one of the electric devices may be mounted with the aircraft wing.

The assembly may also include an aircraft fuselage. At least one of the electric devices may be mounted with the aircraft fuselage.

The assembly may also include an aircraft airframe and an aircraft propulsion system. The aircraft airframe may include a first airframe component and a second airframe component. The aircraft propulsion system may be mounted to the aircraft airframe. The aircraft propulsion system may include the open propulsor rotor and the turbine engine. The electric devices may include a first electric device, a second electric device and a third electric device. The first electric device may be mounted with the first airframe component. The second electric device may be mounted with the second airframe component. The third electric device may be mounted with the aircraft propulsion system.

The assembly may also include an aircraft airframe, an aircraft propulsion system, a first electric machine controller and a second electric machine controller. The aircraft propulsion system may be mounted to the aircraft airframe. The aircraft propulsion system may include the open propulsor rotor and the turbine engine. The first electric machine controller may be electrically coupled between the first electric machine and the electrical system. The first electric machine controller may be mounted with the aircraft airframe. The second electric machine controller may be electrically coupled between the second electric machine and the electrical system. The second electric machine controller may be mounted with the aircraft airframe.

The first electric machine may be configurable as an electric generator during a generator mode of operation. In addition or alternatively, the first electric machine may be configurable as an electric motor during a motor mode of operation.

The second electric machine may be configurable as an electric generator during a generator mode of operation. In addition or alternatively, the second electric machine may be configurable as an electric motor during a motor mode of operation.

The turbine engine may include a first rotating structure and a second rotating structure. The first rotating structure may include a first bladed rotor. The first rotating structure may be operatively coupled to an electric machine rotor of the first electric machine through the accessory gearbox. The second rotating structure may include a second bladed rotor. The second rotating structure may be operatively coupled to an electric machine rotor of the second electric machine through the accessory gearbox.

At least one of the electric devices may be configured as or otherwise include an electric actuator.

At least one of the electric devices may be configured as or otherwise include an electric pump.

At least one of the electric devices may be configured as or otherwise include an electric valve.

The assembly may also include an open guide vane structure axially next to the open propulsor rotor.

The assembly may also include a vane actuation system configured to change a pitch of at least one open guide vane included in the open guide vane structure. At least one of the electric devices may be configured as an electric actuator included in the vane actuation system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft with multiple propulsion systems mounted to wings of the aircraft.
FIG. 2 is a schematic illustration of the aircraft with its propulsion systems mounted to a fuselage of the aircraft.
FIG. 3 is a schematic illustration of an exemplary one of the propulsion systems.
FIG. 4 is a schematic illustration of a forward portion of the propulsion system of FIG. 3.
FIG. 5 is a schematic illustration of a portion of an exemplary one of the propulsion systems with an electric machine system and an electric accessory system coupled to an aircraft electrical system.
FIG. 6 is a schematic illustration of controllers for the electric machine system mounted with an airframe component.
FIG. 7 is a schematic illustration of electric devices mounted with an exemplary one of the propulsion systems.
FIG. 8 is a partial schematic illustration along a compressor section.
FIG. 9 is a partial schematic illustration at a bleed from an engine flowpath.
FIGS. 10-12 are schematic illustrations depicting various locations in which one or more electric devices may be disposed remote from each propulsion system.
FIG. 13 is a partial schematic illustration of an exemplary one of the propulsion systems with a single rotor (SR) open rotor configuration.
FIG. 14 is a partial schematic illustration of an exemplary one of the propulsion systems with a counter-rotating open rotor (CROR) configuration.

### DETAILED DESCRIPTION

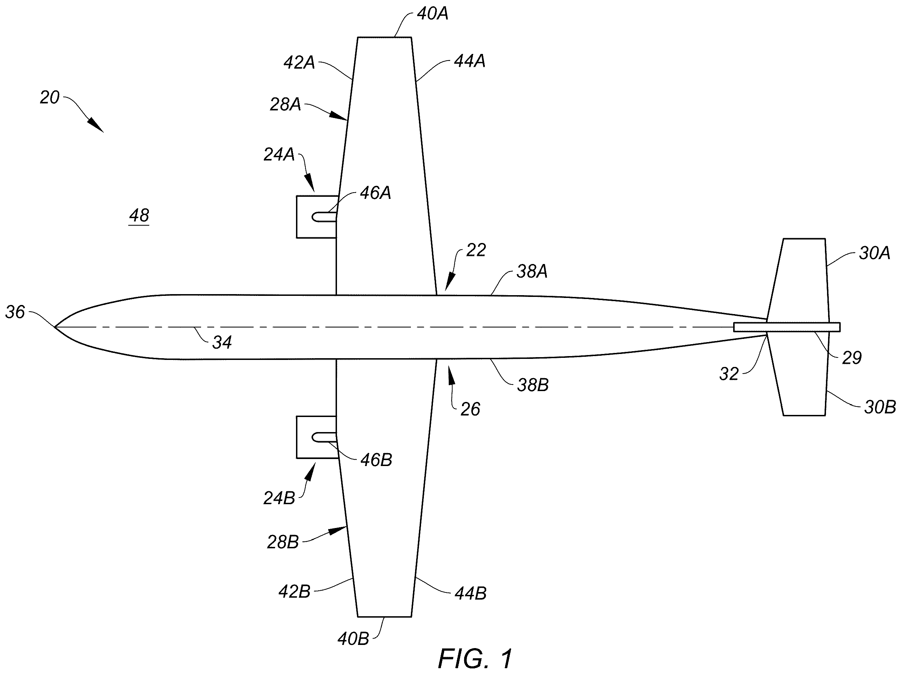

FIG. 1 is a schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems.

The aircraft airframe 22 of FIG. 1 includes an aircraft fuselage 26 and one or more aircraft wings 28A and 28B (generally referred to as "28"). This aircraft airframe 22 may also include one or more aircraft stabilizers, such as at least one vertical stabilizer 29 and one or more horizontal stabilizers 30A and 30B (generally referred to as "30") arranged at (e.g., on, adjacent or proximate) an aft, downstream tail end 32 of the aircraft fuselage 26. However, in other embodiments, it is contemplated one or more of the aircraft stabilizers 29, 30A and/or 30B may be omitted where, for example, the aircraft 20 is alternatively configured as a blended wing aircraft.

The aircraft fuselage 26 extends longitudinally along a longitudinal centerline 34 of the aircraft airframe 22 and its aircraft fuselage 26 from a forward, upstream nose end 36 of the aircraft airframe 22 and its aircraft fuselage 26 to the fuselage tail end 32. The aircraft fuselage 26 extends laterally between and to opposing lateral sides 38A and 38B (generally referred to as "38") of the aircraft fuselage 26.

The aircraft wings 28A and 28B are arranged to the opposing lateral sides 38A and 38B of the aircraft fuselage 26. The first aircraft wing 28A of FIG. 1, for example, is connected to the aircraft fuselage 26 at the fuselage first side 38A. The second aircraft wing 28B is connected to the aircraft fuselage 26 at the fuselage second side 38B. The aircraft fuselage 26 of FIG. 1 is thereby located laterally between the first aircraft wing 28A and the second aircraft wing 28B. Each of these aircraft wings 28A, 28B projects spanwise out from the aircraft fuselage 26 to a tip 40A, 40B of the respective aircraft wing 28A, 28B. Each of the aircraft wings 28A, 28B extends longitudinally between and to a leading edge 42A, 42B of the respective aircraft wing 28A, 28B and a trailing edge 44A, 44B of the respective aircraft wing 28A, 28B.

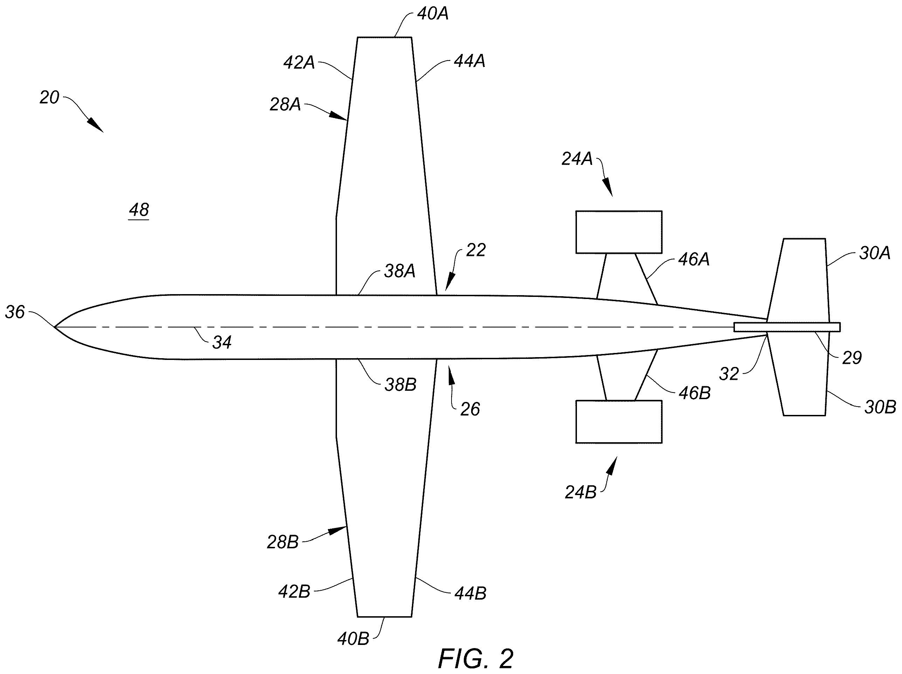

The aircraft propulsion systems 24A and 24B of FIG. 1 are arranged to the opposing lateral sides 38A and 38B of the aircraft fuselage 26. The first aircraft propulsion system 24A of FIG. 1, for example, is mounted to the first aircraft wing 28A by a first pylon structure 46A. The second aircraft propulsion system 24B is mounted to the second aircraft wing 28B by a second pylon structure 46B. The aircraft fuselage 26 of FIG. 1 is thereby located laterally between the first aircraft propulsion system 24A and the second aircraft propulsion system 24B. The present disclosure, however, is not limited to such an exemplary arrangement. For example, referring to FIG. 2, the first aircraft propulsion system 24A may alternatively be mounted to the aircraft fuselage 26 at the fuselage first side 38A by the first pylon structure 46A. The second aircraft propulsion system 24B may alternatively be mounted to the aircraft fuselage 26 at the fuselage second side 38B by the second pylon structure 46B.

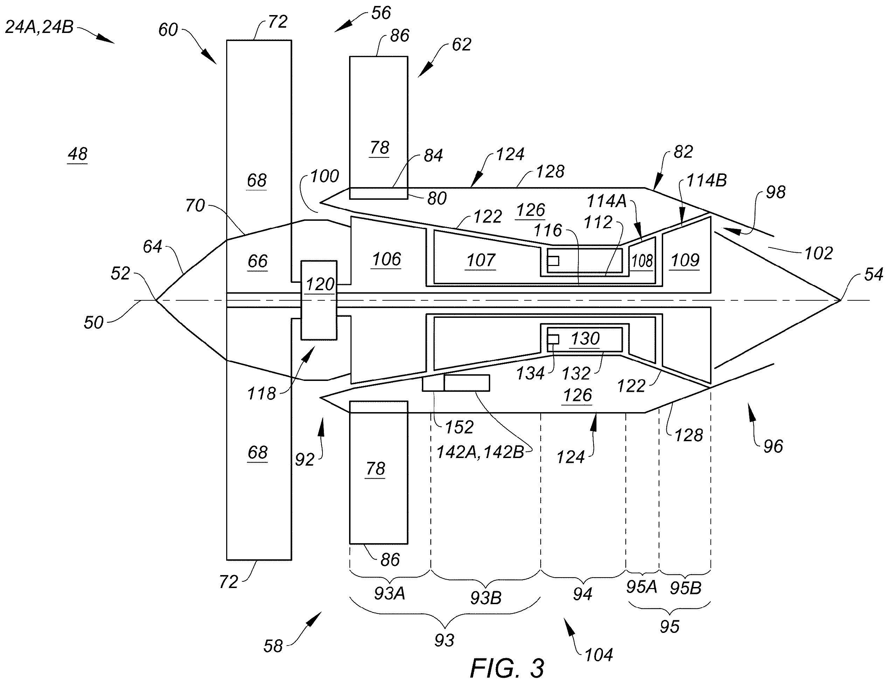

FIG. 3 is a schematic illustration of an exemplary one of the aircraft propulsion systems 24. This aircraft propulsion system 24 may be configured as an open rotor propulsion system with a single open rotor and swirl recovery vane (SRV) architecture. Herein, the term "open" may describe a propulsion system section and/or a propulsion system component which is open to an environment 48 (e.g., an ambient environment) external to the aircraft propulsion system 24 and, more generally, the aircraft 20 (see FIG. 1 or 2).

The aircraft propulsion system 24 extends axially along an axis 50 between an upstream, forward end 52 of the aircraft propulsion system 24 and a downstream, aft end 54 of the aircraft propulsion system 24. The propulsion system axis 50 may be a centerline axis of the aircraft propulsion system 24 and/or a centerline axis of one or more members of the aircraft propulsion system 24. The propulsion system axis 50 may also or alternatively be a rotational axis of one or more members of the aircraft propulsion system 24. The aircraft propulsion system 24 of FIG. 3 includes an open rotor propulsion section 56 (e.g., an open rotor propulsion module) and a gas turbine engine 58.

The propulsion section 56 of FIG. 3 includes an open propulsor rotor 60 and an open guide vane structure 62. These propulsion section members 60 and 62 are un-ducted and (optionally) unshrouded components of the aircraft propulsion system 24 and its propulsion section 56. The propulsion section 56 of FIG. 3 also includes a nose cone 64 disposed at (e.g., on, adjacent or proximate) the propulsion system forward end 52. Briefly, this nose cone 64 may be configured as a spinner which is rotatable with the propulsor rotor 60 about the propulsion system axis 50. Alternatively, the nose cone 64 may be configured as a stationary structure of the propulsion section 56.

The propulsor rotor 60 includes a rotor base 66 (e.g., a disk or a hub) and a plurality of open propulsor blades 68 (e.g., airfoils). The propulsor blades 68 are arranged and may be equispaced circumferentially about the rotor base 66 and the propulsion system axis 50 in an array; e.g., a circular array. Each of the propulsor blades 68 is connected to (e.g., formed integral with or otherwise attached to) the rotor base 66. Each of the propulsor blades 68 projects spanwise along a span line of the respective propulsor blade 68 (e.g., radially relative to the propulsion system axis 50) out from an exterior surface 70 of the rotor base 66, into the external environment 48, to a distal tip 72 of the respective propulsor blade 68. Each propulsor blade 68 is thereby configured as an un-ducted and (optionally) unshrouded propulsor blade which is exposed to (e.g., disposed in) the surrounding external environment 48.

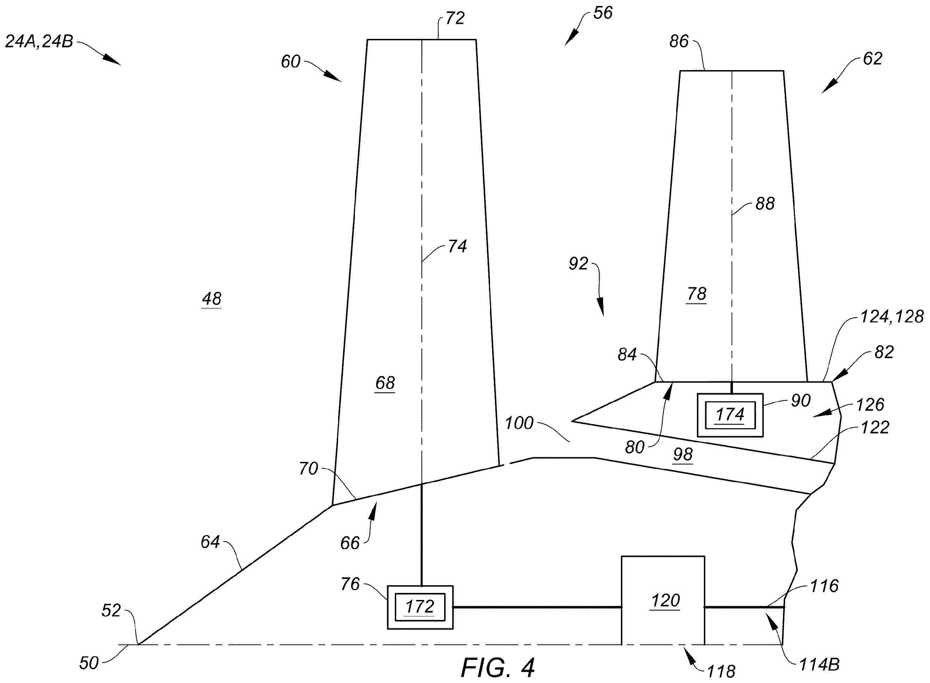

Referring to FIG. 4, each propulsor blade 68 may be configured to pivot about a respective blade pivot axis 74. This blade pivot axis 74 extends radially relative to the propulsion system axis 50. The blade pivot axis 74 of FIG. 4, for example, is arranged perpendicular to the propulsion system axis 50 when viewed, for example, in a longitudinal reference plane parallel to (e.g., including) the propulsion system axis 50; e.g., the plane of FIG. 4. Each propulsor blade 68 of FIG. 4 is operatively coupled with a blade actuation system 76. This blade actuation system 76 is configured to pivot each propulsor blade 68 about its own respective blade pivot axis 74. By pivoting each propulsor blade 68 about its blade pivot axis 74, a pitch of the respective propulsor blade 68 may be changed. Note, while the blade pivot axis 74 is shown in FIG. 4 as being perpendicular to the propulsion system axis 50, it is contemplated this blade pivot axis 74 may or may not be coincident with the propulsion system axis 50. Moreover, it is contemplated each blade pivot axis 74 may alternatively be angularly offset from the propulsion system axis 50 by an acute angle or an obtuse angle when viewed, for example, in the longitudinal reference plane. Of course, it is contemplated some or all of the propulsor blades 68 may be alternatively moved to change the propulsor blade pitch. Moreover, it is contemplated some or all of the propulsor blades 68 may alternatively be fixed pitch propulsor blades in other embodiments.

The guide vane structure 62 of FIG. 3 includes a plurality of open exit guide vanes 78 (e.g., airfoils) that are arranged and may be equispaced circumferentially about the propulsion system axis 50 in an array; e.g., a circular array. This guide vane structure 62 and its guide vanes 78 are arranged axially next to (e.g., adjacent) the propulsor rotor 60 and its propulsor blades 68. The guide vane structure 62 and its guide vanes 78 of FIG. 3, for example, are arranged downstream of the propulsor rotor 60 and its propulsor blades 68, without (e.g., any) other elements axially therebetween to obstruct, turn and/or otherwise influence the air propelled by the propulsor rotor 60 to the guide vane structure 62 for example. Each of the guide vanes 78 of FIG. 3 is coupled to a support structure 80 of a stationary housing structure 82 for the aircraft propulsion system 24. This support structure 80 may be configured as or otherwise include a support frame, a case and/or another fixed structure of the housing structure 82. Each of the guide vanes 78 projects spanwise along a span line of the respective guide vane 78 (e.g., radially relative to the propulsion system axis 50) out from an exterior surface 84 of the housing structure 82, into the external environment 48, to a distal tip 86 of the respective guide vane 78. Here, the exterior surface 84 radially borders the external environment 48 and forms an exterior aerodynamic flow surface of the aircraft propulsion system 24. Each guide vane 78 is thereby configured as an un-ducted and (optionally) unshrouded guide vane which is exposed to (e.g., disposed in) the surrounding external environment 48.

Referring to FIG. 4, each guide vane 78 may be configured to pivot about a respective vane pivot axis 88. This vane pivot axis 88 extends radially relative to the propulsion system axis 50. The vane pivot axis 88 of FIG. 4, for example, is arranged perpendicular to the propulsion system axis 50 when viewed, for example, in the longitudinal reference plane. Each guide vane 78 of FIG. 4 is operatively coupled with a vane actuation system 90, which vane actuation system 90 may be discrete from or integrated as part of the blade actuation system 76. The vane actuation system 90 is configured to pivot each guide vane 78 about its own respective vane pivot axis 88. By pivoting each guide vane 78 about its vane pivot axis 88, a pitch of the respective guide vane 78 may be changed. Note, while the vane pivot axis 88 is shown in FIG. 4 as being perpendicular to the propulsion system axis 50, it is contemplated this vane pivot axis 88 may or may not be coincident with the propulsion system axis 50. Moreover, it is contemplated each vane pivot axis 88 may alternatively be angularly offset from the propulsion system axis 50 by an acute angle or an obtuse angle when viewed, for example, in the longitudinal reference plane. Of course, it is contemplated some or all of the guide vanes 78 may be alternatively moved to change the guide vane pitch. Moreover, it is contemplated some or all of the guide vanes 78 may alternatively be fixed pitch guide vanes in other embodiments.

Referring to FIG. 3, the turbine engine 58 includes an inlet section 92, a compressor section 93, a combustor section 94, a turbine section 95 and an exhaust section 96. The compressor section 93 of FIG. 3 includes a low pressure compressor (LPC) section 93A and a high pressure compressor (HPC) section 93B. The turbine section 95 of FIG. 3 includes a high pressure turbine (HPT) section 95A and a low pressure turbine (LPT) section 95B. The turbine engine 58 also includes an engine flowpath 98 (e.g., an annular core flowpath) which extends longitudinally through the aircraft propulsion system 24 of FIG. 3 and its turbine engine 58 from an airflow inlet 100 into the engine flowpath 98 to a combustion products exhaust 102 from the engine flowpath 98. The flowpath inlet 100 is also an airflow inlet into the aircraft propulsion system 24 of FIG. 3 and its turbine engine 58. The flowpath exhaust 102 is also a combustion products exhaust from the aircraft propulsion system 24 of FIG. 3 and its turbine engine 58. At least (or only) the LPC section 93A, the HPC section 93B, the combustor section 94, the HPT section 95A and the LPT section 95B collectively form a core 104 (e.g., a gas generator) of the turbine engine 58.

Each of the engine sections 93A, 93B, 95A and 95B includes a respective bladed rotor 106-109; e.g., a ducted engine rotor. Each of these engine rotors 106-109 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 98. Each of the rotor blades is connected to the respective rotor base. Each of the rotor blades projects radially (e.g., spanwise) out from the respective rotor base into the engine flowpath 98 and to a distal tip of the respective rotor blade.

The HPC rotor 107 is coupled to and rotatable with the HPT rotor 108. The HPC rotor 107 of FIG. 3, for example, is connected to the HPT rotor 108 by a high speed shaft 112. At least (or only) the HPC rotor 107, the HPT rotor 108 and the high speed shaft 112 collectively form a high speed rotating structure 114A; e.g., a high speed spool of the engine core 104. This high speed rotating structure 114A of FIG. 3 and its members 107, 108 and 112 are rotatable about the propulsion system axis 50. However, in other embodiments, the high speed rotating structure 114A and its members 107, 108 and 112 may alternatively be rotatable about another rotational axis which is (e.g., laterally and/or angularly) offset from the rotational axis of the propulsor rotor 60.

The LPC rotor 106 is coupled to and rotatable with the LPT rotor 109. The LPC rotor 106 of FIG. 3, for example, is connected to the LPT rotor 109 by a low speed shaft 116. At least (or only) the LPC rotor 106, the LPT rotor 109 and the low speed shaft 116 collectively form a low speed rotating structure 114B; e.g., a low speed spool of the engine core 104. This low speed rotating structure 114B of FIG. 3 and its members 106, 109 and 116 are rotatable about the propulsion system axis 50. However, in other embodiments, the low speed rotating structure 114B and its members 106, 109 and 116 may alternatively be rotatable about another rotational axis which is (e.g., laterally and/or angularly) offset from the rotational axis of the propulsor rotor 60.

The low speed rotating structure 114B is coupled to the propulsor rotor 60 through a drivetrain 118. This drivetrain 118 may be configured as a geared drivetrain, where a geartrain 120 (e.g., a transmission, a speed change device, an epicyclic geartrain, etc.) is disposed between and operatively couples the propulsor rotor 60 to the low speed rotating structure 114B and its LPT rotor 109. With this arrangement, the propulsor rotor 60 may rotate at a different (e.g., slower) rotational speed than the low speed rotating structure 114B and its LPT rotor 109. Here, the propulsor rotor 60 and the low speed rotating structure 114B may rotate in a common (the same) direction about the propulsion system axis 50 or in opposite directions about the propulsion system axis 50 depending, for example, upon the specific configuration of the geartrain 120. Alternatively, the drivetrain 118 may be configured as a direct-drive drivetrain, where the geartrain 120 is omitted. With such an arrangement, the propulsor rotor 60 rotates at a common (the same) rotational speed as the low speed rotating structure 114B and its LPT rotor 109.

The engine sections 92-96 may be arranged sequentially along the propulsion system axis 50 and are housed within and/or formed by the housing structure 82. This housing structure 82 includes an engine case 122 (e.g., a gas generator case), a nacelle 124 and an internal housing compartment 126. The engine case 122 houses one or more of the engine sections 93A-95B; e.g., the engine core 104. The engine case 122 of FIG. 3, for example, extends axially along (e.g., axially overlaps) and extends circumferentially about (e.g., circumscribes) the engine sections 93A-95B and the respective bladed rotors 106-109. The engine case 122 may also house the geartrain 120. The nacelle 124 houses and provides an aerodynamic cover over the engine case 122. An exterior wall 128 of the nacelle 124 of FIG. 3, for example, is disposed radially outboard of, extends axially along (e.g., axially overlaps) and extends circumferentially about (e.g., circumscribes) the engine core 104 and its engine case 122. This nacelle wall 128 may at least partially or completely form the exterior surface 84. The housing compartment 126 of FIG. 3 is at least partially or completely formed by and is disposed radially between the engine case 122 and the nacelle wall 128. With the foregoing arrangement, the bladed rotors 106-109 are disposed within the housing structure 82. By contrast, the propulsor rotor 60 and the guide vane structure 62 are disposed at least partially (or completely) outside of the housing structure 82.

During operation of the aircraft propulsion system 24 of FIG. 3, ambient air within the external environment 48 is propelled by the rotating propulsor rotor 60 in the downstream, aft direction towards the propulsion system aft end 54. A major portion (e.g., more than 50%) of this air bypasses the turbine engine 58 to provide forward thrust while a minor portion (e.g., less than 50%) of the air flows into the turbine engine 58. For example, an outer stream of the air propelled by the rotating propulsor rotor 60 flows axially across the guide vane structure 62 and outside of the housing structure 82 and its exterior surface 84; e.g., along an exterior of the nacelle 124. The guide vane structure 62 conditions (e.g., straightens out, deswirls, etc.) the outer stream of air within the external environment 48 to enhance the forward thrust. By contrast, an inner stream of the air propelled by the rotating propulsor rotor 60 may bypass the guide vane structure 62 and enter the turbine engine 58 and its engine flowpath 98 through the flowpath inlet 100. The air entering the engine flowpath 98 through the flowpath inlet 100 may be referred to as "core air".

The core air is compressed by the LPC rotor 106 and the HPC rotor 107 and directed into a combustion chamber 130 (e.g., an annular combustion chamber) of a combustor 132 (e.g., an annular combustor) in the combustor section 94. Fuel is injected into the combustion chamber 130 by one or more fuel injectors 134 and mixed with the compressed core air to provide a fuel-air mixture. This fuel-air mixture is ignited and combustion products thereof flow through and sequentially drive rotation of the HPT rotor 108 and the LPT rotor 109. The rotation of the HPT rotor 108 and the LPT rotor 109 respectively drive rotation of the HPC rotor 107 and the LPC rotor 106 and, thus, compression of the core air. The rotation of the LPT rotor 109 also drives the rotation of the propulsor rotor 60 through the geartrain 120. The turbine engine 58 and its low speed rotating structure 114B thereby power operation of (e.g., drive rotation of) the propulsor rotor 60 during aircraft propulsion system operation.

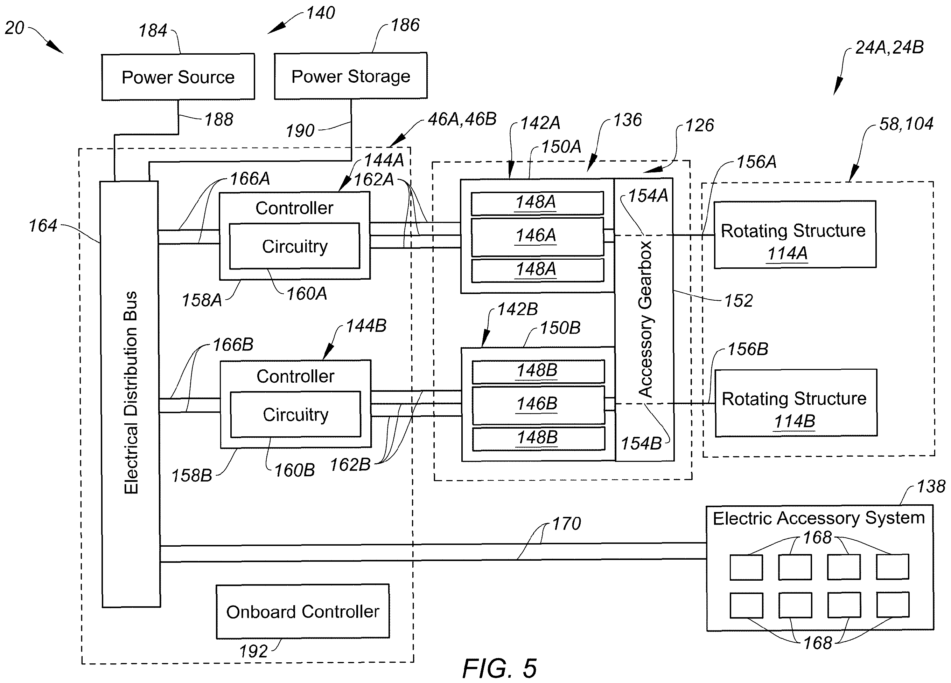

Referring to FIG. 5, the aircraft propulsion system 24 also includes an electric machine system 136 electrically coupled to an electric accessory system 138 and an electrical system 140 for the aircraft 20 and its aircraft propulsion system 24. The electric machine system 136 of FIG. 5 includes one or more electric machines 142A and 142B (generally referred to as "142") and one or more electric machine (EM) controllers 144A and 144B (generally referred to as "144"). For ease of description, each electric machine 142 of FIG. 5 is described below as being electrically coupled to, controlled by and/or otherwise associated with a single, dedicated one of the EM controllers 144. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 142A, 142B of FIG. 5 includes an electric machine rotor 146A, 146B (generally referred to as "146"), an electric machine stator 148A, 148B (generally referred to as "148") and an electric machine housing 150A, 150B (generally referred to as "150"); e.g., a case. The machine rotor 146 is rotatable about a rotational axis of the machine rotor 146, which rotational axis may also be an axial centerline of the electric machine 142. The machine stator 148 of FIG. 5 is radially outboard of and circumscribes the machine rotor 146. With this arrangement, each electric machine 142 is configured as a radial flux electric machine. The electric machines 142 of the present disclosure, however, are not limited to such an exemplary rotor-stator configuration nor to radial flux arrangements. The machine rotor 146, for example, may alternatively be radially outboard of and circumscribe the machine stator 148. In another example, the machine rotor 146 may be axially next to the machine stator 148 configuring the respective electric machine 142 as an axial flux electric machine. The machine rotor 146 and the machine stator 148 of FIG. 5 are at least partially or completely housed within an interior of the machine housing 150.

The electric machines 142 may be mounted to a common stationary component of the aircraft propulsion system 24. Each electric machine 142 of FIG. 5, for example, is mounted to a gearbox 152 (e.g., an accessory gearbox) for the turbine engine 58. Referring to FIG. 3, the gearbox 152 may be disposed within the housing compartment 126. The gearbox 152 of FIG. 3, for example, is located radially outboard of and next to the engine case 122, and the gearbox 152 may also be mounted to the engine case 122. Each electric machine 142 may thereby be disposed within the housing compartment 126 and mounted with the housing structure 82 and its engine case 122; e.g., at least indirectly mounted to the engine case 122 through the gearbox 152. The present disclosure, however, is not limited to such an exemplary arrangement. For example, it is contemplated the gearbox 152 and, thus, the electric machines 142 may alternatively be disposed remote from (e.g., external to) the aircraft propulsion system 24; e.g., in the respective pylon structure 46A, 46B (generally referred to as "46") (see FIG. 1 or 2).

Referring to FIG. 5, each electric machine 142A, 142B is operatively coupled to a respective one of the engine rotating structures 114A, 114B (generally referred to as "114") through the gearbox 152. Each machine rotor 146A, 146B of FIG. 5, for example, is mechanically coupled to a respective gear system 154A, 154B (generally referred to as "154") of the gearbox 152, and the gearbox gear system 154A, 154B is mechanically coupled to the respective engine rotating structure 114A, 114B through a respective drivetrain 156A, 156B (generally referred to as "156"). This drivetrain 156 may be configured as or otherwise include a shaft, a tower shaft assembly, another gearbox (e.g., an angle gearbox), and/or the like. For ease of description, each machine rotor 146 of FIG. 5 is described below as being coupled to and rotatable with a unique one of the engine rotating structures 114 of the aircraft propulsion system 24. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system.

Each electric machine 142 of FIG. 5 may be configurable as an electric motor and/or an electric generator; e.g., an electric motor-generator. For example, during a motor mode of operation, a respective electric machine 142 may operate as the electric motor to convert electricity received from the aircraft electrical system 140 into mechanical power. The machine stator 148, for example, may generate an electromagnetic field with the machine rotor 146 using a current of electricity received from the aircraft electrical system 140 through the respective EM controller 144. This electromagnetic field may drive rotation of the machine rotor 146. The machine rotor 146, in turn, may provide mechanical power to and drive rotation of the respective engine rotating structure 114 through the gearbox 152 and its respective gearbox gear system 154 and the respective drivetrain 156. This mechanical power may be provided to boost power or completely power the rotation of the respective engine rotating structure 114. By contrast, during a generator mode of operation, the electric machine 142 may operate as the electric generator to convert mechanical power received from the respective engine rotating structure 114 into electricity. Rotation of the machine rotor 146, for example, may be rotationally driven by rotation of the respective engine rotating structure 114 through the respective drivetrain 156 and the gearbox 152 and its respective gearbox gear system 154. The rotation of the machine rotor 146 may generate an electromagnetic field with the machine stator 148, and the machine stator 148 may convert energy from the electromagnetic field into electricity. The respective electric machine 142 may then provide a current of electricity to the aircraft electrical system 140 through the respective EM controller 144 for storage and/or further use. The electric machines 142 of the present disclosure, however, are not limited to such exemplary operation. For example, one, some or all of the electric machines 142 may alternatively each be configured as a dedicated electric generator; e.g., without the electric motor functionality.

Each EM controller 144A, 144B includes a controller housing 158A, 158B (generally referred to as "158") and internal controller circuitry 160A, 160B (generally referred to as "160"). The controller housing 158 may be configured as an enclosed case (e.g., a closed or sealed container) for the respective controller circuitry 160. The controller circuitry 160 is disposed within an interior of the controller housing 158; e.g., an internal chamber or other volume(s) within and enclosed by the controller housing 158. The controller circuitry 160 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 144A, 144B is electrically coupled to a respective one of the electric machines 142A, 142B through one or more electric cables 162A, 162B (generally referred to as "162"); e.g., high voltage electric cables, power feeder cables, etc. More particularly, the controller circuitry 160 of each EM controller 144 is electrically coupled to the respective electric machine 142 and its machine stator 148 through the respective electric cables 162. Similarly, each EM controller 144A, 144B is electrically coupled to an electrical distribution bus 164 of the aircraft electrical system 140 through one or more electric cables 166A, 166B (generally referred to as "166"); e.g., high voltage electric cables, power feeder cables, etc. More particularly, the controller circuitry 160 of each EM controller 144 is electrically coupled to the aircraft electrical system 140 and its electrical distribution bus 164 through the respective electric cables 166.

Each EM controller 144 and its controller circuitry 160 are configured to control operation of a respective one of the electric machines 142. For example, when operating as the electric motor, the respective EM controller 144 and its controller circuitry 160 are configured to regulate a flow of electricity from the aircraft electrical system 140 to the respective electric machine 142. This electricity flow regulation may include: (a) turning-on the flow of electricity from the aircraft electrical system 140 to the respective electric machine 142 (e.g., electrically coupling the respective electric machine 142 to the aircraft electrical system 140); (b) turning-off the flow of electricity from the aircraft electrical system 140 to the respective electric machine 142 (e.g., electrically decoupling the respective electric machine 142 from the aircraft electrical system 140); (c) moderating the flow of electricity from the aircraft electrical system 140 to the respective electric machine 142. Here, the respective EM controller 144 operates as a motor controller. In another example, when operating as the electric generator, the respective EM controller 144 and its controller circuitry 160 are configured to regulate a flow of electricity from the respective electric machine 142 to the aircraft electrical system 140. This electricity flow regulation may include: (a) turning-on the flow of electricity from the respective electric machine 142 to the aircraft electrical system 140 (e.g., electrically coupling the respective electric machine 142 to the aircraft electrical system 140); (b) turning-off the flow of electricity from the respective electric machine 142 to the aircraft electrical system 140 (e.g., electrically decoupling the respective electric machine 142 from the aircraft electrical system 140); (c) moderating the flow of electricity from the respective electric machine 142 to the aircraft electrical system 140. Here, the respective EM controller 144 operates as a generator controller.

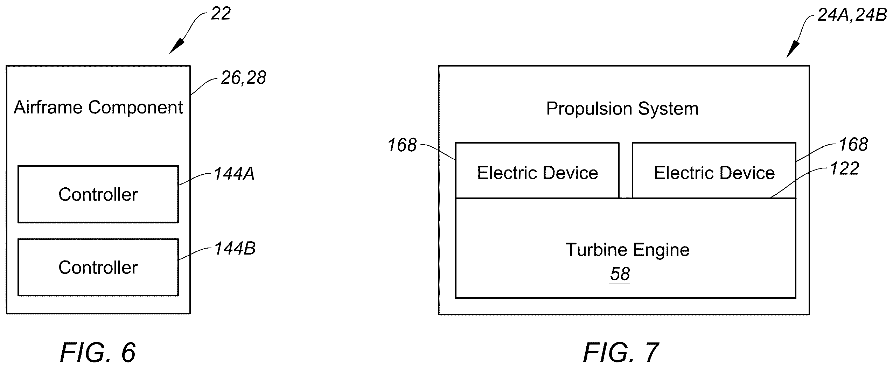

One or more of the EM controllers 144 may be disposed remote from (e.g., external to) of the aircraft propulsion system 24. Each EM controller 144 of FIG. 5, for example, may be mounted to, disposed within and/or otherwise arranged with the pylon structure 46 which mounts the respective aircraft propulsion system 24 and its turbine engine 58 to the respective aircraft wing 28 (see FIG. 1) or the aircraft fuselage 26 (see FIG. 2). With this arrangement, each EM controller 144 may be disposed in a relatively cool portion of the aircraft 20 and remote from the relatively hot turbine engine 58 and its engine core 104. In addition, by reducing a number of components arranged with the aircraft propulsion system 24 (e.g., mounted to the engine case 122 and/or within the housing compartment 126), aero-lines of the housing structure 82 and its nacelle 124 (see FIG. 3) may be moved radially inward and shaped to reduce aerodynamic drag. For example, the housing structure 82 and its nacelle 124 of FIG. 3 may be configured without any bulges, with fewer bulges and/or with smaller bulges which may otherwise be included to accommodate EM controller arrangement with the aircraft propulsion system 24; e.g., within the housing compartment 126. The present disclosure, however, is not limited to such an exemplary arrangement. For example, referring to FIG. 6, each EM controller 144 may be mounted to, disposed within and/or otherwise arranged with another component of the aircraft airframe 22; e.g., one of the aircraft wings 28, the aircraft fuselage 26, etc. Moreover, while the EM controllers 144 are described above as being located remoted from the aircraft propulsion system 24, it is contemplated one or more of the EM controllers 144 may alternatively be mounted to, disposed within and/or otherwise arranged with the aircraft propulsion system 24 and its turbine engine 58, for example, to reduce length of the electric cables 162 of FIG. 5.

The electric accessory system 138 of FIG. 5 includes one or more electric devices 168. The electric devices 168 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 168 of FIG. 5 may be configured as part of one or more sub-systems for the aircraft propulsion system 24 and its turbine engine 58. Examples of these sub-systems include, but are not limited to: a fuel system for delivering the fuel to the fuel injectors 134 (see FIG. 3); a lubrication system for delivering lubricant (e.g., oil) to one or more lubricated components (e.g., bearing(s), gear system(s), seal system(s), etc.) of the aircraft propulsion system 24 and its turbine engine 58; a cooling system for delivering coolant (e.g., liquid coolant, air, etc.) to one or more fluid cooled components of the aircraft propulsion system 24 and its turbine engine 58; and/or an actuation system for moving one or more adjustable components (e.g., variable guide vanes, a variable area nozzle, etc.) of the aircraft propulsion system 24 and its turbine engine 58. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 168 is electrically coupled to the electrical distribution bus 164 of the aircraft electrical system 140 through one or more electric cables 170 (collectively schematically shown); e.g., high voltage electric cables, low voltage electric cables, power feeder cables, etc. Each electric device 168 may thereby receive a current of electricity from the aircraft electrical system 140 to power operation thereof.

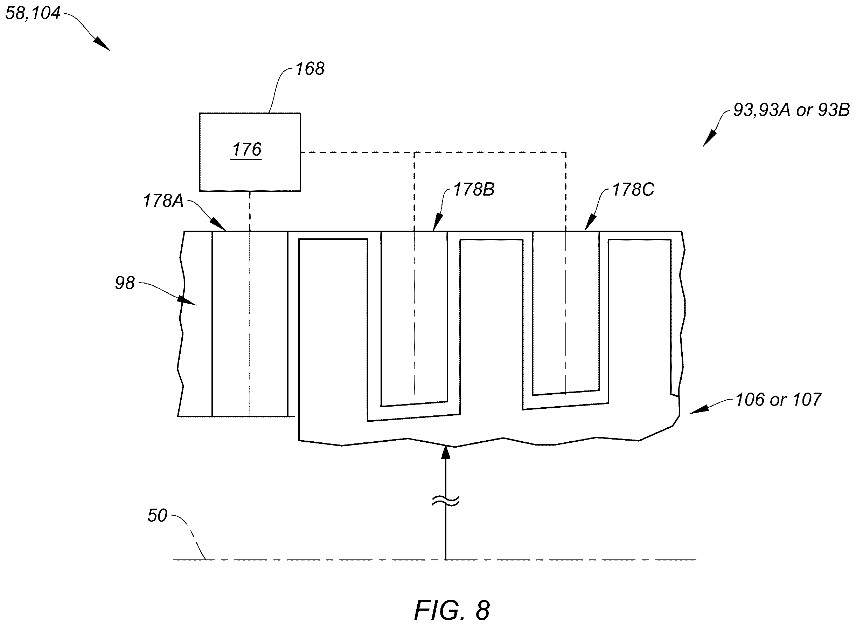

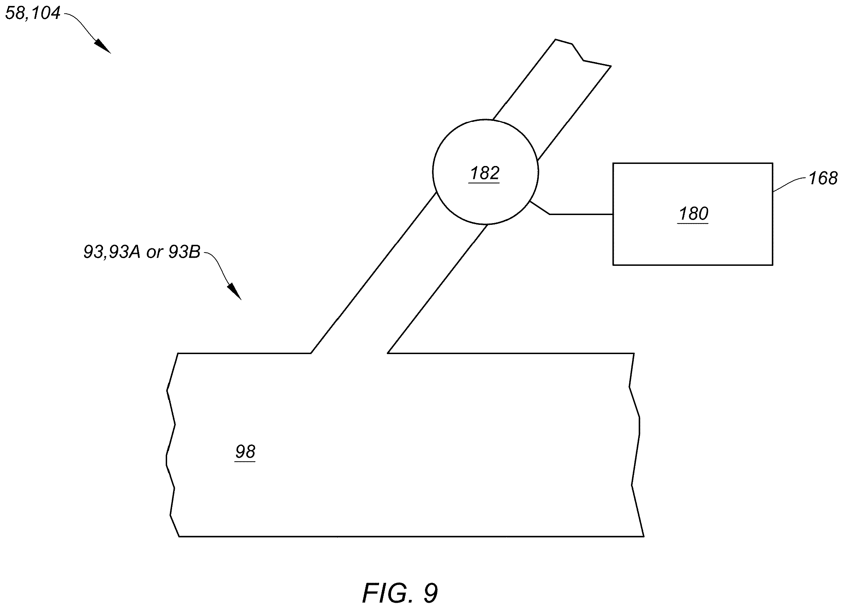

Referring to FIG. 7, one or more of the electric devices 168 may be mounted to, disposed within and/or otherwise arranged with the aircraft propulsion system 24 and its turbine engine 58. One or more of the electric devices 168, for example, may be arranged within the housing compartment 126 (see FIG. 3) and/or mounted to the engine case 122. This mounting of the respective electric device 168 to the engine case 122 may be a direct mounting or an indirect mounting through an intermediate mounting structure. Examples of the electric device(s) 168 which may be arranged with the aircraft propulsion system 24 and its turbine engine 58 include, but are not limited to: an electric actuator 172 for the blade actuation system 76 of FIG. 4; an electric actuator 174 for the vane actuation system 90 of FIG. 4; an electric actuator 176 for variable pitch vanes 178A-C along the engine flowpath 98 within the compressor section 93 of FIG. 8; an electric actuator 180 of a bleed valve 182 for bleeding core air from the engine flowpath 98 of FIG. 9; and/or an electric actuator for an active clearance control system.

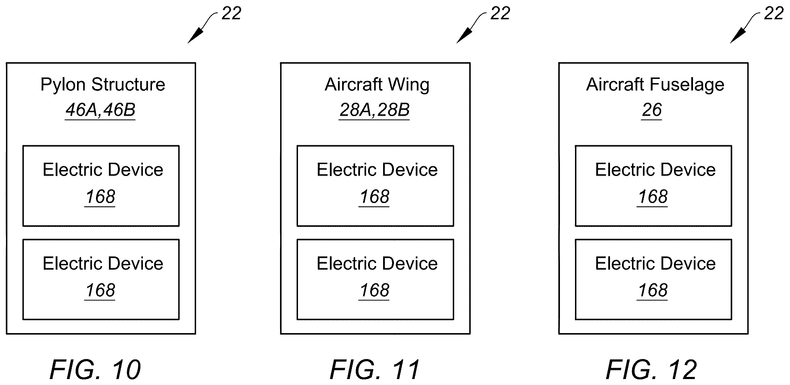

Referring to FIGS. 10-12, one or more of the electric devices 168 may be disposed remote from (e.g., external to) the aircraft propulsion system 24 (see FIG. 3). For example, referring to FIG. 10, one or more of the electric devices 168 may be mounted to, disposed within and/or otherwise arranged with the pylon structure 46 for the respective aircraft propulsion system 24 (see FIG. 1 or 2). Referring to FIG. 11, one or more of the electric devices 168 may also or alternatively be mounted to, disposed within and/or otherwise arranged with at least one of the aircraft wings 28. Referring to FIG. 12, one or more of the electric devices 168 may still also or alternatively be mounted to, disposed within and/or otherwise arranged with another portion, component and/or structure of the aircraft airframe 22 such as the aircraft fuselage 26. With the foregoing arrangements, each electric device 168 of FIGS. 10-12 may be disposed in a relatively cool portion of the aircraft 20 (see FIG. 1 or 2) and remote from the relatively hot turbine engine 58 and its engine core 104 (see FIG. 3). In addition, by reducing a number of components arranged with the aircraft propulsion system 24 of FIG. 3 (e.g., mounted to the engine case 122 and/or within the housing compartment 126), aero-lines of the housing structure 82 and its nacelle 124 may be moved radially inward and shaped to reduce aerodynamic drag. For example, the housing structure 82 and its nacelle 124 may be configured without any bulges, with fewer bulges and/or with smaller bulges which may otherwise be included to accommodate electric device arrangement with the aircraft propulsion system 24; e.g., within the housing compartment 126.

While any one, some or all of the electric devices 168 of FIG. 5 may be mounted outside of the respective aircraft propulsion system 24 (e.g., with 26, 28 and/or 46 of FIG. 1 or 2), electric devices such as fuel pump(s) and/or hydraulic pump(s) may be particularly suited to being located outside of the respective aircraft propulsion system 24. This may facilitate packaging, positioning the respective electric device 168 closer to a fluid source and/or a fluid destination, etc.

Referring to FIG. 5, the aircraft electrical system 140 includes the electrical distribution bus 164. This aircraft electrical system 140 may also include a power source 184 and/or a power storage 186. The electrical distribution bus 164 is electrically coupled to each of the electric machines 142 through their respective EM controllers 144. The electrical distribution bus 164 is electrically coupled to each of the electric devices 168. The electrical distribution bus 164 is also electrically coupled to the power source 184 and the power storage 186, schematically shown via 188 and 190 respectively. With this arrangement, the electrical distribution bus 164 provides an intermediate connection between the various electrical aircraft propulsion system members 144, 168, 184 and 186. The power source 184 may be an electric generator powered by the turbine engine 58 (see FIG. 3) or an electric generator powered by another aircraft powerplant; e.g., an engine of a companion aircraft propulsion system, an engine of an auxiliary power unit (APU), a fuel cell system, etc. The power storage 186 is configured to receive electricity from the electrical distribution bus 164 for storage. The power storage 186 is also configured to provide the stored electricity to the electrical distribution bus 164. The power storage 186, for example, may be configured as or otherwise include one or more electricity storage devices; e.g., batteries, super capacitors, etc. With the foregoing aircraft electrical system arrangement, the electrical current provided to one, some or all of the electric devices 168 may be received, through the electrical distribution bus 164, from any one, some or all of the electrical aircraft propulsion system members 142A, 142B, 184 and/or 186.

The aircraft propulsion system 24 may also include an onboard controller 192 to coordinate and/or directly control operation of the electric machine system 136 and/or the electric accessory system 138. Examples of the onboard controller 192 include, but are not limited to, an electronic engine controller (EEC), an electronic control unit (ECU), and a fullauthority digital engine controller (FADEC). Like the EM controllers 144, the onboard controller 192 (as well as other aircraft electronics) may be mounted remote from the respective aircraft propulsion system 24; e.g., with the pylon structure 46 or another portion, component and/or structure of the aircraft airframe 22.

In some embodiments, the electric machines 142 may be the only external components mounted to and operatively coupled to the gearbox 152. Thus, the gearbox 152 may be dedicated to the electric machines 142. However, in other embodiments, it is contemplated one or more additional engine accessories may also be mounted to and operatively coupled to the gearbox 152 and, more particularly, to one or both of the rotating structures 114.

In some embodiments, a quantity of the one or more electric devices 168 arranged remote from the respective aircraft propulsion system 24 (e.g., with the aircraft airframe 22) may be equal to or greater than a quantity of the one or more electric devices 168 arranged with the respective aircraft propulsion system 24. Moreover, in some embodiments, it is contemplated all of the electric devices 168 of the electric accessory system 138 may be mounted remote from the respective aircraft propulsion system 24; e.g., with the aircraft airframe 22. Of course, in select other embodiments, it is contemplated the quantity of the electric device(s) 168 arranged remote from the respective aircraft propulsion system 24 may be less than the quantity of the electric device(s) 168 arranged with the respective aircraft propulsion system 24.

The engine flowpath 98 of FIG. 3 extends longitudinally from the flowpath inlet 100, sequentially through the inlet section 92, the LPC section 93A, the HPC section 93B, the combustor section 94, the HPT section 95A, the LPT section 95B and the exhaust section 96, to the flowpath exhaust 102. The engine flowpath 98 of FIG. 3 is configured such that the core air and the combustion products generally flow in the aft, downstream direction towards the propulsion system aft end 54. The core air and the combustion products thereby flow along with the ambient air propelled by the rotating propulsor rotor 60 in a common axial direction - the downstream, aft direction. The turbine engine 58 of the present disclosure, however, is not limited to such an exemplary common flow engine arrangement. For example, the engine flowpath 98 may alternatively be configured such that the core air and the combustion products generally flow in a forward, upstream direction towards the propulsion system forward end 52. The core air and the combustion products may thereby flow in an opposite direction as the ambient air propelled by the rotating propulsor rotor 60. Here, the turbine engine 58 may have a reverse flow engine arrangement.

The aircraft propulsion system 24 of FIG. 3 and its propulsion section 56 are described above with a tractor configuration; e.g., where the propulsor rotor 60 is disposed at or otherwise near the propulsion system forward end 52. It is contemplated, however, the propulsion section 56 may alternatively be disposed at or otherwise near the propulsion system aft end 54 to provide a pusher fan configuration. Moreover, while the turbine engine 58 is described above with a particular two rotating structure arrangement, the present disclosure is not limited thereto. For example, the LPC rotor 106 may be omitted to configure the LPT rotor 109 as a power turbine (PT) rotor for the propulsor rotor 60. In another example, the turbine engine 58 may also include another rotating structure; e.g., an intermediate speed spool for the engine core 104.

The guide vane structure 62 is described above as a fixed (e.g., non-rotatable) guide vane structure. It is contemplated, however, the guide vane structure 62 may alternatively be selectively rotatable about the propulsion system axis 50. With such an arrangement, the aircraft propulsion system 24 may be configured as an open rotor propulsion system with a swirl recovery blade (SRB) open rotor architecture. More particularly, the aircraft propulsion system 24 may operate as: (A) a counter-rotating open rotor (CROR) propulsion system during a dual rotor mode of operation (e.g., when both the propulsor rotor 60 and the structure 62 are counter-rotating about the propulsion system axis 50); and (B) a single open rotor and swirl recovery vane (SRV) propulsion system during a single rotor mode of operation (e.g., when the propulsor rotor 60 is rotating and the structure 62 is rotationally fixed about the propulsion system axis 50). Note, when the guide vane structure 62 is configured to selectively rotate about the propulsion system axis 50, the moving guide vanes 78 operate as propulsor blades.

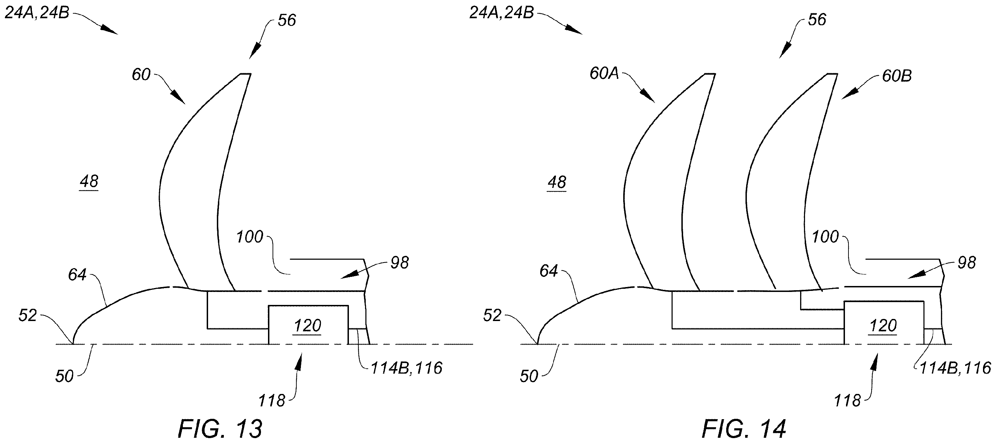

The aircraft propulsion system 24 of FIG. 3 and its propulsion section 56 are described as including the guide vane structure 62 with an SRV or SRB configuration. The present disclosure, however, is not limited to such an exemplary propulsion system configuration. For example, referring to FIG. 13, each aircraft propulsion system 24 may alternatively be configured without an open guide vane structure. The aircraft propulsion system 24 of FIG. 13, for example, is configured as a single rotor (SR) open rotor propulsion system. In another example, referring to FIG. 14, each aircraft propulsion system 24 may alternatively be configured with a set of the open propulsor rotors 60A and 60B (generally referred to as "60") (e.g., counter-rotating propulsor rotors) operatively coupled to the turbine engine 58 (see FIG. 3) through the geartrain 120. The aircraft propulsion system 24 of FIG. 14, for example, is configured as a counter-rotating open rotor (CROR) propulsion system.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
an open propulsor rotor;
a turbine engine configured to drive rotation of the open propulsor rotor about an axis;
an accessory gearbox mounted with the turbine engine;
a first electric machine operatively coupled to the turbine engine through the accessory gearbox;
a second electric machine operatively coupled to the turbine engine through the accessory gearbox;
an aircraft system configured as at least one of an actuation system, a fuel system, a lubrication system or a cooling system, the aircraft system comprising a plurality of electric devices; and
an electrical system electrically coupled to the first electric machine, the second electric machine and each of the plurality of electric devices.

2. The assembly of claim 1, wherein at least one of the plurality of electric devices is mounted to the turbine engine.

3. The assembly of claim 1 or 2, wherein
the turbine engine includes a compressor section, a combustor section, a turbine section, a flowpath and an engine case;
the compressor section, the combustor section and the turbine section are housed within the engine case;
the flowpath extends through the compressor section, the combustor section and the turbine section from an inlet into the flowpath to an exhaust from the flowpath; and
at least one of the plurality of electric devices is mounted to the engine case.

4. The assembly of claim 1, 2 or 3, further comprising:
a nacelle wall housing, and forming an aerodynamic cover over, an engine case that is part of the turbine engine; and
at least one of the plurality of electric devices arranged within a compartment formed by and extending radially between the engine case and the nacelle wall.

5. The assembly of any preceding claim, further comprising:
a pylon structure;
the turbine engine mounted to the pylon structure; and
at least one of the plurality of electric devices mounted with the pylon structure.

6. The assembly of any preceding claim, further comprising:
an aircraft wing, at least one of the plurality of electric devices mounted with the aircraft wing.

7. The assembly of any preceding claim, further comprising:
an aircraft fuselage, at least one of the plurality of electric devices mounted with the aircraft fuselage.

8. The assembly of any preceding claim, further comprising:
an aircraft airframe comprising a first airframe component and a second airframe component; and
an aircraft propulsion system mounted to the aircraft airframe, the aircraft propulsion system comprising the open propulsor rotor and the turbine engine;
the plurality of electric devices comprising a first electric device, a second electric device and a third electric device, the first electric device mounted with the first airframe component, the second electric device mounted with the second airframe component, and the third electric device mounted with the aircraft propulsion system; and/or
further comprising:
an aircraft airframe;
an aircraft propulsion system mounted to the aircraft airframe, the aircraft propulsion system comprising the open propulsor rotor and the turbine engine;
a first electric machine controller electrically coupled between the first electric machine and the electrical system, the first electric machine controller mounted with the aircraft airframe; and
a second electric machine controller electrically coupled between the second electric machine and the electrical system, the second electric machine controller mounted with the aircraft airframe; and/or
wherein the turbine engine comprises
a first rotating structure comprising a first bladed rotor, the first rotating structure operatively coupled to an electric machine rotor of the first electric machine through the accessory gearbox; and
a second rotating structure comprising a second bladed rotor, the second rotating structure operatively coupled to an electric machine rotor of the second electric machine through the accessory gearbox.

9. The assembly of any preceding claim, wherein at least one of
the first electric machine is configurable as an electric generator during a generator mode of operation; or
the first electric machine is configurable as an electric motor during a motor mode of operation.

10. The assembly of any preceding claim, wherein at least one of the plurality of electric devices comprises:
an electric actuator; and/or
an electric pump; and/or
an electric valve.

11. The assembly of any preceding claim, further comprising an open guide vane structure axially next to the open propulsor rotor.

12. The assembly of claim 11, further comprising a vane actuation system configured to change a pitch of at least one open guide vane included in the open guide vane structure, and at least one of the plurality of electric devices configured as an electric actuator included in the vane actuation system.

13. An assembly for an aircraft, comprising:
an aircraft airframe;
an aircraft propulsion system mounted to the aircraft airframe, the aircraft propulsion system comprising an open propulsor rotor, a turbine engine and a first electric machine, the turbine engine configured to drive rotation of the open propulsor rotor about an axis, and the first electric machine operatively coupled to the turbine engine;
an aircraft system configured as at least one of an actuation system, a fuel system, a lubrication system or a cooling system, the aircraft system comprising a plurality of electric devices, a first of the plurality of electric devices mounted with the aircraft propulsion system, and a second of the plurality of electric devices mounted with the aircraft airframe; and
an electrical system electrically coupled to the first electric machine and each of the plurality of electric devices.

14. The assembly of claim 13, wherein a larger quantity of the plurality of electric devices are mounted with the aircraft airframe than with the aircraft propulsion system; and/or
further comprising:
a gearbox; and
a second electric machine;
the first electric machine and the second electric machine each operatively coupled to the turbine engine through the gearbox.

15. An assembly for an aircraft, comprising:
an open propulsor rotor;
a turbine engine configured to drive rotation of the open propulsor rotor about an axis;
a gearbox mounted with the turbine engine;
one or more electric machines operatively coupled to the turbine engine through the gearbox, wherein the gearbox is dedicated to transferring mechanical power between the turbine engine and the one or more electric machines;
a first electric device; and
an electrical system electrically coupled to the one or more electric machines and the first electric device, the electrical system configured to receive a first current of electricity from at least one of the one or more electric machines, and the electrical system configured to provide a second current of electricity to the first electric device.
